# FASCICULE DE BREVET EUROPEEN

(11) **EP 1 038 256 B1**
(45) Date de publication et mention de la délivrance du brevet: **18.06.2003**
(21) Numéro de dépôt: 98958972.6
(22) Date de dépôt: 08.12.1998
(51) Int. Cl.: G06K 7/00, G06K 19/073

(54) **MICROCIRCUIT A LOGIQUE CABLEE COMPORTANT UNE INTERFACE DE COMMUNICATION NUMERIQUE**
VERDRAHTETER MIKROSCHALTKREIS MIT EINER SCHNITTSTELLE FÜR DIGITALE KOMMUNIKATION
MICROCIRCUIT WITH WIRED LOGIC COMPRISING A DIGITAL COMMUNICATION INTERFACE

(30) Priorité: 15.12.1997 FR 9715836
(43) Date de publication de la demande: 27.09.2000
(73) Titulaire: Inside Technologies, 69930 Saint-Clément-les-Places (FR)
(72) Inventeur: PANGAUD, Nicolas, 13090 Aix en Provence (FR)
(74) Mandataire: Marchand, André
(86) Numéro de dépôt international: FR9802649
(87) Numéro de publication internationale: WO99031618

(56) Documents cités:
- WO-A-97/14119
- FR-A- 2 698 195

## Description

La présente invention concerne un microcircuit comprenant un circuit d'interface pour détecter des commandes de bas niveau reçues sous forme de signaux électriques ou de combinaisons de signaux électriques appliqués à des contacts électriques.

La présente invention concerne notamment un microcircuit à logique câblée pour carte à mémoire, prévu pour recevoir des commandes de bas niveau selon la norme ISO 7618-2.

A titre liminaire, on rappellera que le terme générique de "carte à puce" désigne deux grandes catégories de cartes qui se distinguent au plan de la technologie : d'une part, les cartes à microprocesseur, comme les cartes bancaires, d'autre part les cartes dites "à mémoire", par exemple les cartes téléphoniques, les cartes à prépaiement,.... A la différence des cartes à microprocesseur, les cartes à mémoire ne disposent que d'un microcircuit à logique câblée qui offre des possibilités plus réduites qu'un microprocesseur en termes de souplesse d'emploi, de capacité de traitement des données, de programmation... En contrepartie, les microcircuits des cartes à mémoire présentent l'avantage d'être d'une structure plus simple et d'un coût de revient très bas, de sorte qu'ils ont fait l'objet ces dernières années de diverses études ayant conduit à d'importants perfectionnements de leurs fonctions à logique câblée, notamment les fonctions relatives à la sécurité. De tels perfectionnements sont notamment décrits dans les demandes WO 97/14119 et 97/14120 au nom de la demanderesse. Ainsi, aujourd'hui, un microcircuit à logique câblée de carte à mémoire peut être équipé d'un circuit de cryptographie performant et de moyens de vérification de la validité d'un code secret utilisateur (ou "PIN" code), à la manière d'un microcircuit de carte bancaire.

La diffusion de cartes à mémoire perfectionnées se heurte toutefois au fait qu'à l'heure actuelle, le parc des lecteurs de carte à mémoire en service est essentiellement composé de lecteurs équipés d'une interface de communication assez rudimentaire, répondant à la norme ISO 7816-2. Cette norme, spécifique aux cartes à mémoire, définit en effet un nombre restreint de commandes électriques susceptibles d'être appliquées aux cartes à mémoire par l'intermédiaire de leurs plages de contact. Ces commandes dites de bas niveau sont par exemple :
- WRITE0 : écriture d'un bit à 0 à une adresse de la mémoire spécifiée par un pointeur d'adresse,
- INCRADD : incrémentation d'une unité du pointeur d'adresse de la mémoire,
- RSTADD : remise à 0 du pointeur d'adresse, etc..

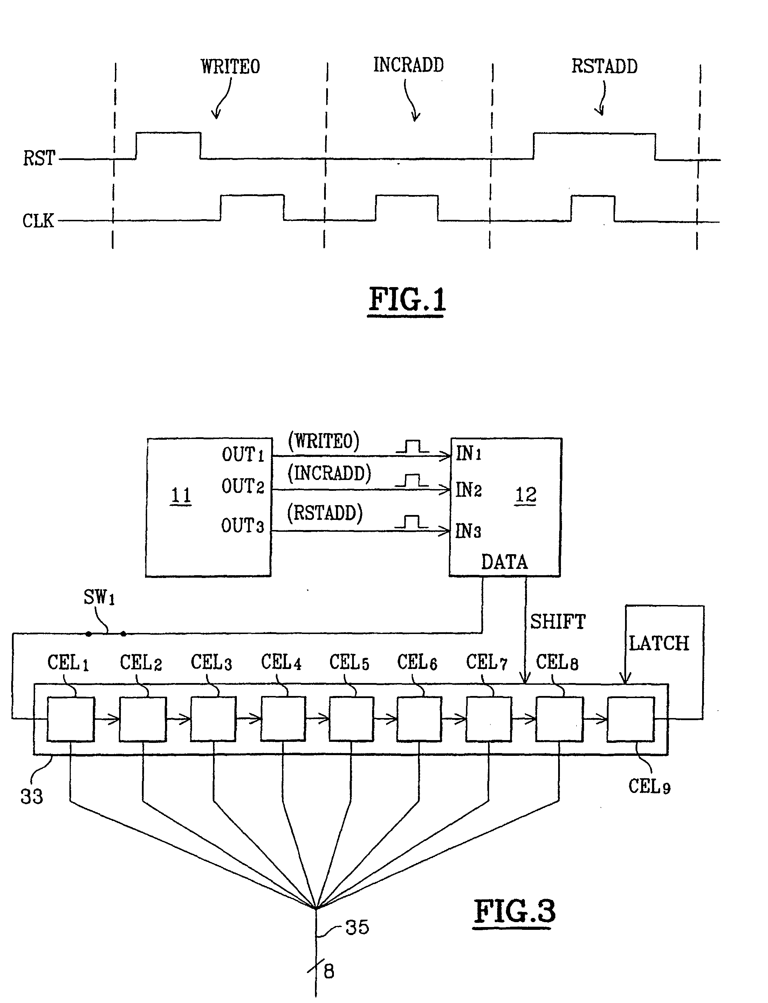

Ces commandes sont envoyées sous forme codée au moyen des signaux classiques de remise à zéro RST (Reset) et d'horloge et CLK (Clock). Pour fixer les idées, la figure 1 illustre le codage électrique selon la norme ISO 7816-2 des trois commandes de bas niveau citées plus haut en exemple. La commande WRITE0 est codée par une impulsion du signal RST suivie d'une impulsion d'horloge CLK, la commande INCRADD est codée par une impulsion d'horloge CLK et la commande RSTADD est codée par une impulsion d'horloge CLK émise simultanément à une impulsion du signal RST.

Ces diverses commandes prévues par la norme ISO 7816-2 présentent l'inconvénient de ne permettre que des opérations élémentaires d'écriture, d'effacement ou de lecture sur la mémoire d'un microcircuit. Aucune commande de haut niveau n'est prévue pour réaliser des opérations plus complexes. Pour réaliser de telles opérations, il est d'usage dans l'art antérieur de prévoir un séquenceur à logique câblé qui déclenche ces opérations à un instant précis de son séquencement, déterminé par le nombre de coups d'horloge CLK reçus depuis la dernière remise à zéro. Par exemple, une opération d'authentification d'une carte à mémoire est réalisée de la façon suivante :
- au moyen de commandes de bas niveau, on enregistre une donnée aléatoire ou ALEA dans la mémoire du microcircuit, par exemple en N coup d'horloge,
- à partir du coup d'horloge N+1, un séquenceur à logique câblée envoie la donnée ALEA dans un circuit de cryptographie et produit, au rythme de l'horloge, un code d'authentification CA et enregistre simultanément ce code dans la mémoire,
- on lit au moyen de commandes de bas niveau le code d'authentification CA enregistré dans la mémoire du microcircuit et on en déduit l'authenticité de la carte.

Cette méthode d'exécution d'opérations complexes au moyen d'un séquenceur, dans laquelle la . mémoire intervient pour le transfert des données utiles (par exemple ALEA et CA) en tant que boîte à lettres accessible grâce aux commandes de bas niveau, conduit à réaliser des microcircuits dont le fonctionnement est prédéterminé et figé, ne pouvant pas recevoir des commandes de haut niveau exécutables à tout instant.

Les possibilités restreintes offertes par l'interface ISO 7816-2 représentent également un handicap pour la réalisation d'un microcircuit universel à deux modes de fonctionnement, avec ou sans contact, dont l'architecture générale est décrite dans la demande PCT/FR97/01230 au nom de la demanderesse. Un tel microcircuit permet de réaliser des cartes à mémoire pouvant être lues aussi bien par des lecteurs de carte sans contact que des lecteurs de cartes à contact conventionnels. En mode de fonctionnement sans contact, le microcircuit reçoit ou émet des données binaires par couplage inductif et peut recevoir, sous forme codée, tous types de commandes de haut niveau. Par contre, en mode contact, le microcircuit ne peut être piloté qu'au moyen des commandes analogiques de bas niveau selon la norme ISO 7816-2. Cette disparité de commandes conduit à prévoir des moyens différents pour l'exécution d'une même opération dans chacun des modes de fonctionnement, et ce type de microcircuit souffre d'une grande complexité et d'un coût de revient élevé.

La présente invention vise à pallier ces divers inconvénients.

Plus particulièrement, un premier objectif de la présente invention est de prévoir un microcircuit à logique câblée pouvant être piloté au moyen de commandes de haut niveau tout en étant compatible avec une interface de communication de bas niveau, par exemple une interface du type ISO 7816-2.

Un autre objectif de la présente invention, indépendant du premier, est de prévoir un microcircuit à deux modes de fonctionnement, avec ou sans contact, offrant la même souplesse de fonctionnement en mode contact qu'en mode sans contact tout en étant d'une structure simple et peu coûteuse.

Ces objectifs sont atteints par la prévision d'un microcircuit selon la revendication 1, et d'un procédé selon la revendication 12.

Ces objets, caractéristiques et avantages de la présente invention, ainsi que d'autres, seront exposés plus en détail dans la description suivante du procédé de l'invention et d'un microcircuit à deux modes de fonctionnement mettant en oeuvre ce procédé, en relation avec les figures jointes parmi lesquelles :
- la figure 1 précédemment décrite représente le codage électrique de commandes de bas niveau selon la norme ISO 7816-2,
- la figure 2 représente sous forme de blocs le schéma électrique d'un microcircuit à deux modes de fonctionnement selon l'invention, et
- la figure 3 illustre un mode de réalisation particulier de certains éléments du microcircuit de la figure 2.

### Description de l'invention

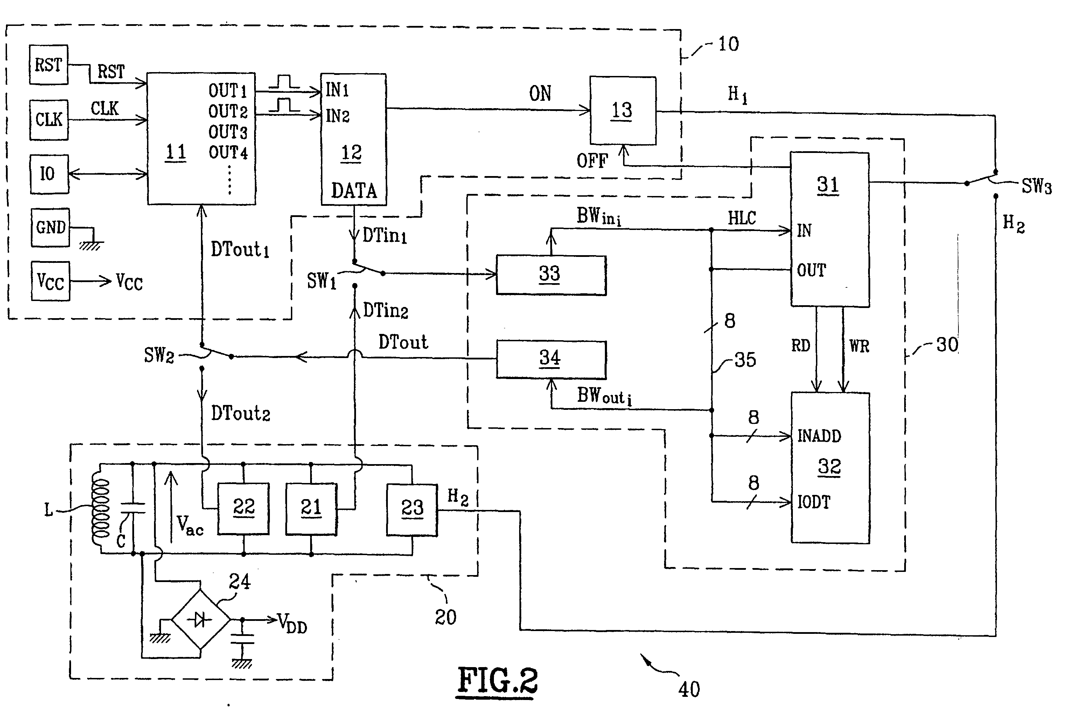

La figure 2 représente le schéma électrique d'un microcircuit 40 à logique câblée selon l'invention, destiné à être monté sur une carte plastique pour former une carte à mémoire. Le microcircuit 40 est du type décrit dans la demande PCT/FR97/01230 et présente deux modes de fonctionnement, avec ou sans contact. Le microcircuit 40 comprend ainsi une partie 10 spécifique à la gestion d'une communication en mode contact, une partie 20 spécifique à la gestion d'une communication en mode sans contact, et une partie 30 commune aux deux modes de fonctionnements.

Selon l'invention, le microcircuit 40 présente trois caractéristiques distinctes qui seront décrites en détail par la suite :
1) la partie 10 du mode contact dispose d'un canal de communication numérique tout en étant compatible avec la norme ISO 7816-2,
2) ce canal de communication numérique est utilisé pour envoyer au microcircuit, en mode contact, des commandes de haut niveau codées en binaire,
3) la partie commune 30 traite indifféremment des commandes de haut niveau reçues en mode contact et des commandes de haut niveau reçues en mode sans contact.

On décrira tout d'abord la structure de la partie 10 spécifique au mode de fonctionnement à contact.

### 1/ Partie spécifique au mode fonctionnement à contact

La partie 10 comprend de façon classique un contact RST pour recevoir un signal de remise à zéro RST, un contact CLK pour recevoir un signal d'horloge externe CLK, un contact IO pour recevoir des données d'entrée/sortie, un contact GND de masse et un contact VCC pour recevoir une tension VCC d'alimentation du microcircuit 40 lorsque celui-ci fonctionne en mode contact, ces divers contacts étant prévus par la norme ISO 7816-2. La partie 10 comprend également de façon classique un circuit d'interface 11 conforme à cette norme, par exemple le circuit SLE4403 commercialisé par la société SIEMENS. Le circuit d'interface 11 est connecté aux contacts RST, CLK, IO et est agencé pour détecter les commandes de bas niveau LC₁, LC₂, LC₃, LC₄... appliquées au microcircuit 40. Le circuit 11 comporte une pluralité de sorties OUT₁, OUT₂, OUT₃, OUT₄... , chaque sortie étant associée à une commande de bas niveau LC₁, LC₂, LC₃, LC₄..., et délivre une impulsion de tension sur une sortie OUTᵢ lorsque la commande LCᵢ correspondante est détectée.

Selon l'invention, la partie 10 comprend également un convertisseur 12 connecté à au moins deux sorties du circuit 11, ici les sorties OUT₁, OUT₂, et comportant une sortie numérique DATA. Ce convertisseur 12 est agencé pour convertir en données binaires au moins deux commandes de bas niveau, ici LC₁, LC₂, reçues par le circuit d'interface 11, utilisées pour transmettre les valeurs binaires 0 et 1. Ainsi, le convertisseur 12 délivre sur sa sortie DATA un bit à 0 quand la commande LC₁ est détectée (une impulsion de tension étant émise par la sortie OUT₁) et délivre un bit à 1 quand la commande LC₂ est détectée (une impulsion de tension étant émise par la sortie OUT₂). Dans un souci de simplicité, on ne décrira pas la structure interne du convertisseur 12 dont la réalisation au moyen de portes logiques et de bascules est à la portée de l'homme de l'art.

Ainsi, lorsque le microcircuit 40 reçoit une suite de commandes de bas niveau LC₁, LC₂, la sortie DATA du convertisseur 12 délivre une suite ou chaîne de bits DTin₁. Par exemple, la suite de commandes suivante:
LC₁, LC₂, LC₂, LC₁, LC₁, LC₂, LC₁, LC₂,
est convertie en une chaîne de bits égale à :
0 1 1 0 0 1 0 1

En d'autres termes, les commandes de bas niveau LC₁, LC₂ choisies pour le transfert de données binaires au microcircuit 40 sont détournées de leur fonction première. Ces commandes ne produisent aucun autre effet sur le microcircuit, et ne sont pas exécutées.

Ainsi, l'application au microcircuit d'une suite ininterrompue de commandes de bas niveau LC₁, LC₂ permet avantageusement de créer un canal de communication numérique. Selon un autre aspect de l'invention, ce canal de communication est utilisé pour transmettre au microcircuit des commandes de haut niveau codées en binaire dont des exemples seront décrits plus loin.

Par ailleurs, l'émission de données binaires DTout1 par la partie 10 est faite de façon classique en appliquant ces données sur le contact IO en synchronisation avec le signal d'horloge externe CLK, cette opération étant réalisée par l'intermédiaire du circuit d'interface 11 qui assure la synchronisation du transfert de données avec l'horloge CLK.

Enfin, la partie 10 comprend un générateur 13 d'un signal d'horloge interne H1 propre au mode de fonctionnement à contact, de fréquence supérieure au signal d'horloge externe CLK. Le générateur 13 est activé par un signal ON délivré par le convertisseur 12 dès l'instant où celui-ci émet une donnée sur sa sortie DATA, et est désactivé par un signal OFF délivré par une unité de traitement 31 qui sera décrite plus loin.

### 2/ Partie spécifique au mode de fonctionnement sans contact

La partie 20 spécifique au fonctionnement sans contact est en elle-même classique et ne sera décrite que succinctement, à titre d'exemple. La partie 20 comprend une interface de communication sans contact comprenant une bobine d'antenne L et une capacité C, l'ensemble formant un circuit d'antenne résonant LC de fréquence propre Fp. La partie 20 comprend par ailleurs un circuit démodulateur-décodeur 21, un circuit codeur-modulateur 22, un circuit 23 délivrant le signal d'horloge interne H2 du mode sans contact, et un pont redresseur 24 à diodes, ces divers circuits étant connectés aux bornes du circuit d'antenne LC.

En présence d'un champ magnétique oscillant à la fréquence Fp, émis par exemple par la bobine d'un lecteur de carte sans contact (non représenté), la bobine L délivre une tension alternative induite Vac. Cette tension Vac est transformée par le pont redresseur 24 en une tension continue VDD assurant l'alimentation du microcircuit 40 en mode de fonctionnement sans contact. La réception de données binaires DTin₂ est assurée par le circuit 21 qui démodule la tension Vac et délivre ces données binaires DTin₂. L'émission de données binaires DTout2 est assurée par le circuit 22 qui module la charge de la bobine L en fonction de ces données, selon un codage prédéterminé. Cette modulation de charge se répercute par couplage inductif sur la bobine du lecteur de carte qui peut ainsi en déduire les données DTout2 qui lui sont envoyées. Enfin, le signal d'horloge H2 du mode sans contact est de façon classique extrait de la tension Vac par le circuit 23, par exemple par division de fréquence, sa fréquence étant généralement un sous-multiple de la fréquence Fp.

Comme on l'a déjà indiqué, ces divers circuits sont bien connus de l'homme de l'art et ne seront pas décrits plus en détail. De plus, l'émission et la réception de données binaires par la partie 20 peuvent reposer sur d'autres techniques que la modulation d'amplitude de la tension Vac et la modulation de la charge de la bobine L, par exemple la modulation FSK, la transmission de signaux infrarouges au moyen de composants optoélectroniques, etc.

### 3/ Partie commune aux deux modes de fonctionnement

La partie 30, essentiellement numérique, comprend une unité de traitement 31, une mémoire de donnée 32, un tampon d'entrée 33 et un tampon de sortie 34 ayant ici une capacité de huit bits chacun. La mémoire 32 comporte une entrée d'adresse INADD, un port d'entrée/sortie parallèle IODT, et est pilotée par des signaux WR (écriture) et RD (lecture) délivrés par l'unité de traitement 31. Le tampon 33 est un registre à décalage comportant une entrée série et une sortie parallèle et le tampon 34 est un registre à décalage comportant une entrée parallèle et une sortie série. Un commutateur SW1 à deux positions permet d'appliquer à l'entrée du tampon 33 des données binaires DTin₁ délivrées par le convertisseur 12 de la partie 10 ou des données binaires DTin₂ délivrées par le circuit démodulateur-décodeur 21 de la partie 20. La sortie parallèle du tampon 33 est connectée à un bus interne 35, ici de huit bits. Le bus 35 est connecté à une entrée IN et une sortie OUT de l'unité de traitement 31, à l'entrée INADD et au port IODT de la mémoire 32, ainsi qu'à l'entrée parallèle du tampon 34. La sortie du tampon 34 délivre des données DTout qui peuvent être appliquées au circuit d'interface 11 de la partie 10 ou au circuit codeur-modulateur 22 de la partie 20, par l'intermédiaire d'un commutateur SW2 à deux positions.

L'unité de traitement 31 est une machine d'états à nombre d'états finis d'un type connu en soi dont la réalisation est à la portée de l'homme de l'art, agencée pour décoder et exécuter des commandes de haut niveau codées en binaire. L'unité de traitement 31 comprend divers circuits classiques nécessaires à l'exécution de ces commandes de haut niveau, par exemple un circuit de décodage des commandes, un circuit de cryptographie à logique câblée et un circuit de contrôle de signatures numériques. L'activation de l'unité de traitement 31 est assurée par l'un des deux signaux d'horloge H1 ou H2 décrits plus haut, sélectionné en fonction du mode de fonctionnement du microcircuit au moyen d'un commutateur à deux positions SW3.

### 4/ Fonctionnement et avantages du microcircuit

Les données DTin₁ ou DTin₂ reçues sous forme série sont injectées dans le tampon d'entrée 33 de la partie 30, et le contenu du tampon 33 est déchargé en parallèle sur le bus 35 tous les huit bits reçus, sous la forme d'un mot binaire BWinᵢ. Selon l'invention, ce mot binaire BWinᵢ est une commande de haut niveau ou un élément d'une commande plus complexe, par exemple :
- un code opération CODE_{OP} d'une opération à exécuter, à appliquer sur l'entrée IN de l'unité de traitement 31,
- une adresse ADD à appliquer sur l'entrée INADD de la mémoire 32,
- une donnée WDATA à enregistrer dans la mémoire 32, par l'intermédiaire du port IODT,
- une donnée aléatoire ALEA à partir de laquelle le microcircuit 40 doit produire un code d'authentification CA,
- une signature CRC de message, permettant de détecter les erreurs de transmission, etc.

Les commandes de haut niveau, les codes opérations CODE_{OP}, les données du type ALEA ou CRC sont lues et traitées par l'unité de traitement 31. Les autres données comme des adresses ADD ou des données WDATA à enregistrer sont directement appliquées à la mémoire 32, sous le contrôle de l'unité 31.

Par ailleurs, les données DTout1, DTout2 devant être envoyées à un lecteur de carte sont appliquées en parallèle, sous forme de mots binaires BWoutᵢ, à l'entrée du tampon de sortie 34 et délivrées bit à bit par la sortie du tampon 34. Ces données peuvent comprendre, par exemple :
- un code INF délivré par l'unité de traitement 31,
- un code d'authentification CA délivré par l'unité 31,
- une donnée RDATA lue dans la mémoire 32,
- une donnée WDATA écrite dans la mémoire 32, renvoyée pour confirmation, etc.
Ces données DTout sont envoyées au circuit 11 de la partie 10 ou au circuit codeur-modulateur 22 de la partie 20, selon la position du commutateur SW2.

Ainsi, avantageusement, le microcircuit 40 reçoit des commandes de haut niveau de même format et de même codage quel que soit son mode de fonctionnement. Cet avantage est obtenu grâce à la possibilité de recevoir des données binaires en mode contact, et par le fait que le microcircuit ne comporte qu'un seul circuit de traitement 31 pour les deux modes de fonctionnement. Cette caractéristique simplifie considérablement la structure du microcircuit et permet d'obtenir la même souplesse de fonctionnement en mode contact qu'en mode sans contact.

### 5/ Exemple de commandes de haut niveau envoyées au microcircuit

Pour fixer les idées, on trouvera ci-après quelques exemples de commandes de haut niveau pouvant être envoyées au microcircuit 40. Ces commandes sont divisées en champs de huit bits se retrouvant dans le microcircuit 40 sous forme de mots binaires BWinᵢ délivrés par le tampon 33 sur le bus 35. Le premier champ CODE_{OP} contient le code de l'opération à exécuter et les autres champs contiennent des données complémentaires et/ou des données de signature.

Commande READ (lecture de la mémoire 32) :

| | | | |
|---|---|---|---|
| CODE_{READ} | ADD | CRC₁ | CRC₂ |

Cette commande comprend le code de l'opératio CODE_{READ}, une adresse de lecture ADD, et deux octets de signature CRC₁, CRC₂ formant ensemble une signature sur 16 bits.

Commande WRITE (écriture dans la mémoire 32) :

| | | | | | | | |
|---|---|---|---|---|---|---|---|
| CODE_{WRITE} | ADD | W₁ | W₂ | W₃ | W₄ | CRC₁ | CRC₂ |

Cette commande comprend le code de l'opération CODE_{WRITE}, une adresse d'écriture ADD, une donnée de 32 bits à écrire dans la mémoire, décomposée en quatre octets W₁ à W₄, et deux octets de signature CRC₁, CRC₂.

Commande AUTHENTICATE (demande d'authentification)

| | | | | |
|---|---|---|---|---|
| CODE_{AUTH} | ALEA₁ | ALEA₂ | ALEA₃ | ALEA₄ |

Cette commande d'authentification du microcircuit comprend le code de l'opération CODE_{AUTH} et une donnée aléatoire de 32 bits décomposée en quatre octets ALEA₁ à ALEA₄.

Comme on l'a déjà indiqué, l'émission des réponses du microcircuit 40 en mode contact est faite de façon plus conventionnelle, par l'intermédiaire du contact IO et en synchronisation avec l'horloge externe CLK, conformément à la norme ISO 7816-2. Le format des réponses peut être uniformisé pour les deux modes de fonctionnement, et est par exemple le suivant :

| | | |
|---|---|---|
| INF | XDATA | CRC |

Le champ INF peut être une donnée invariable commune à tous les messages, où une donnée variable permettant de coder des messages en retour. Le champ XDATA contient une information à transmettre, par exemple une donnée RDATA ou WDATA, un code d'authentification CA, etc. Enfin, le champ de vérification CRC est optionnel et peut être utile dans des messages de confirmation au moyen desquels le microcircuit 40 confirme l'exécution d'une opération nécessitant un haut niveau de contrôle et de sécurité.

### 6/ Envoi des commandes de haut niveau en mode contact à partir d'un lecteur de carte de type classique

Dans ce qui précède on s'est attaché à décrire la mise en oeuvre, du côté du microcircuit 40, du procédé selon l'invention permettant de recevoir des données binaires par l'intermédiaire de commandes de bas niveau. La mise en oeuvre de l'invention suppose par ailleurs que l'on soit en mesure, du côté d'un lecteur de carte, d'émettre d'une façon simple les commandes de bas niveau LC₁, LC₂ véhiculant les données binaires. Ici, la présente invention se fonde sur le fait que, façon classique, les lecteurs de carte à mémoire sont programmables au moyen de macro-commandes standardisées facilitant le travail des programmeurs. Ces macro-commandes sont décomposées automatiquement par les lecteurs de cartes en une suite de commandes de bas niveau.

Plus particulièrement, l'idée de l'invention est d'envoyer au microcircuit 40 les octets BWinᵢ d'une commande de haut niveau au moyen de la macro-commande classique :
WRITE("octet"ₕ, "adresse"ₕ)
qui signifie : "écrire l'octet spécifié (en hexadécimal) à l'adresse spécifiée (également en hexadécimal)", chaque octet BWinᵢ à envoyer étant placé dans le champ "octet". Cette macro-commande est décomposée par les lecteurs de carte en une suite de commandes de bas niveau WRITE0 (écriture d'un bit à 0) et INCRADD (incrémentation d'un pointeur d'adresse) déjà décrites au préambule, la commande WRITE0 étant émise lorsque un 0 doit être écrit dans une mémoire, et la commande INCRADD émise lorsqu'un 1 doit y être écrit (en effet, l'écriture d'un bit à 1 dans une mémoire de carte à mémoire se traduit en pratique par une simple incrémentation d'adresse au moyen de la commande de bas niveau INCRADD, tous les points mémoire étant mis à 1 à la mise en service de la carte).

Dans le cas où la macro-commande WRITE est utilisée, comme on vient de le proposer, les commandes de bas niveau LC₁ et LC₂ véhiculant des données numériques sont alors WRITE0 et INCRADD.

En pratique, la présente invention propose d'envoyer chaque mot binaire BWinᵢ exprimé en hexadécimal au moyen de la macro-commande suivante :
WRITE(BWinᵢ, 00ₕ)
dans laquelle le champ "adresse" est toujours à zéro. En procédant ainsi, on évite que le lecteur de carte n'envoie, avant la suite de commandes WRITE0 (écriture d'un 0) et INCRADD (écriture d'un 1), une suite de commandes préliminaires INCRADD ayant pour but d'amener un pointeur d'adresse à l'adresse spécifiée dans l'instruction. Ainsi, par exemple, le mot :
BWinᵢ = 0 1 1 0 0 1 0 1 (soit 65ₕ en notation hexadécimale)
est envoyé au moyen de la macro-commande :
WRITE (65ₕ, 00ₕ)

Cette macro-commande provoque dans un lecteur de carte à mémoire l'émission de la suite de commandes de bas niveau suivante :
RSTADD, WRITE0, INCRADD, INCRADD, WRITE0, WRITE0, INCRADD, WRITE0, INCRADD

La commande RSTADD (remise à 0 du pointeur d'adresse) n'étant pas reconnue par le convertisseur 12 comme une valeur binaire, cette suite de commandes est elle-même transformée par le convertisseur 12 en une chaîne de bits égale à :
0 1 1 0 0 1 0 1
En définitive, et très avantageusement, on retrouve sur la sortie DATA du convertisseur 12 le mot binaire BWinᵢ placé dans la macro-commande.

Par ailleurs, la réception de données du type INF, XDATA et CRC par un lecteur de carte peut être obtenue grâce à la macro-commande classique :
READ (Nₕ, 00ₕ)
dans laquelle N exprimé en hexadécimal est le nombre de bits que l'on s'attend à recevoir du microcircuit 40, le champ adresse étant toujours mis à zéro pour la raison susmentionnée. Bien entendu, cette macro-commande n'est pas perçue comme une commande par le microcircuit 40. Cette macro-commande génère simplement l'émission de N coups d'horloge externe CLK. Dans le microcircuit 40 selon l'invention, l'unité de traitement 31 sait qu'elle va devoir émettre des données (par exemple parce qu'elle a reçue précédemment une commande de haut niveau READ ou AUTHENTICATE), et attend le signal d'horloge CLK. Lorsque le premier coup d'horloge CLK est reçu, l'unité 31 envoie ces données bit à bit sur le contact IO, par l'intermédiaire du circuit d'interface 11, en synchronisation avec l'horloge CLK conformément à la norme ISO 7816-2.

### 7/ Insertion d'un bit de séparation dans les commandes de haut niveau envoyés au microcircuit

Dans ce qui précède, on a vu que les commandes de haut niveau envoyées au microcircuit 40 comportent plusieurs champs CODE_{OP}, ALEA, Wᵢ,... se retrouvant sous la forme d'une chaîne de bits sur la sortie DATA du convertisseur 12, puis sous la forme de mots binaires BWinᵢ sur le bus interne 35, la taille des champs étant adaptée à la capacité du tampon d'entrée 33, ici de huit bits. En pratique, il est donc nécessaire de prévoir un moyen pour déclencher le déchargement du tampon 33 sur le bus 35, à chaque fois que celui-ci est plein. Un comptage des impulsions délivrées par les sorties OUT1, OUT2 du circuit d'interface 11 est envisageable mais s'avère être une solution médiocre pouvant conduire à des erreurs de synchronisation. La présente invention propose une méthode plus avantageuse, qui consiste à :
1) insérer un bit de séparation BS, ou bit de "start", à l'entrée du tampon 33 avant l'arrivée des bits significatifs d'une commande,
2) propager le bit BS dans le tampon 33 à chaque insertion d'un bit significatif,
3) décharger le tampon 33 quand le bit BS apparaît à l'autre extrémité du tampon 33. Pour mettre en oeuvre cette méthode, il est par ailleurs avantageux de générer le bit de séparation BS au moyen de la commande de bas niveau RSTADD. En effet, on a vu plus haut que l'exécution de la macro-commande WRITE(BWinᵢ, 00ₕ) dans laquelle le champ "adresse" est à zéro, commence toujours par l'envoi de la commande RSTADD visant à remettre à zéro un pointeur d'adresse.

La figure 3 représente un mode de réalisation du convertisseur 12 et du tampon d'entrée 33 mettant en oeuvre la méthode qui vient d'être décrite. Le convertisseur 12 est maintenant connecté à trois sorties OUT₁, OUT₂, OUT₃ du circuit 11, activées respectivement par les commandes de bas niveau WRITE0, INCRADD, et RSTADD. Le tampon 12 comporte neuf cellules mémoire CEL₁ à CEL₉ en cascade, la sortie DATA du convertisseur 12 étant connectée à l'entrée de la première cellule CEL₁. Le décalage des bits des cellules CELᵢ vers les cellules de rang supérieur CELᵢ₊₁ est déclenché par un signal SHIFT délivré par le convertisseur 12. Par ailleurs, le contenu des cellules CEL₁ à CEL₈ est déchargé sur le bus 35 lorsqu'un signal LATCH délivré par la sortie de la neuvième cellule CEL₉ passe à 0. Après le déchargement, toutes les cellules CEL₁ à CEL₉ sont automatiquement mises à 1. Le convertisseur 12 délivre un bit à 0 sur sa sortie DATA quand l'une quelconque des commandes WRITEO et RSTADD est reçue par le circuit d'interface 11 (sortie OUT₁ ou OUT₃ activée) et délivre un bit à 1 quand le signal INCRADD est reçu (sortie OUT₂ activée). Après avoir délivré un bit, le convertisseur 12 délivre le signal de décalage SHIFT, de sorte que le bit délivré est chargé dans la première cellule CEL₁ et les autres bits contenus dans le tampon 33 sont décalés d'un rang.

Les divers champs d'une commande de haut niveau étant envoyés au microcircuit 40 au moyen de la macro-commande WRITE(BWinᵢ, 00ₕ), le transfert de chaque mot BWinᵢ est précédé de l'émission de la commande de bas niveau RSTADD, comme on l'a expliqué plus haut. Cette commande RSTADD provoque l'émission d'un bit de séparation BS à 0 sur la sortie DATA du convertisseur 12, de sorte que les commandes de haut niveau précédemment décrites ont maintenant l'aspect suivant :

| READ : | | | | | | | |
|---|---|---|---|---|---|---|---|
| 0 | CODE_{READ} | 0 | ADD | 0 | CRC₁ | 0 | CRC₂ |

| WRITE : | | | | | | | | | | | | | | | |
|---|---|---|---|---|---|---|---|---|---|---|---|---|---|---|---|
| 0 | CODE_{WRITE} | 0 | ADD | 0 | W₁ | 0 | W₂ | 0 | W₃ | 0 | W₄ | 0 | CRC₁ | 0 | CRC₂ |

| AUTHENTICATE | | | | | | | | | |
|---|---|---|---|---|---|---|---|---|---|
| 0 | CODE_{AUTH} | 0 | ALEA₁ | 0 | ALEA₂ | 0 | ALEA₃ | 0 | ALEA₄ |

Ainsi, le premier bit inséré dans le tampon 33 après un déchargement du tampon sur le bus 35 est le bit de séparation BS, qui est à 0. A cet instant, toutes les cellules y compris la cellule CEL₉ sont à 1. Après neuf décalages déclenchés par le signal SHIFT, le bit BS se trouve à la sortie de la cellule CEL₉ de sorte que le signal de déchargement LTCH passe à 0. Ainsi, selon l'invention, l'insertion du bit de séparation BS dans la chaîne binaire délivrée par le convertisseur 12 permet de décharger automatiquement le tampon 33 sur le bus 35 et par ailleurs d'assurer une bonne synchronisation entre le microcircuit 40 et un lecteur de carte à mémoire.

### 8/ Variantes et applications de l'invention

I1 va de soi que les aspects de la présente invention relatifs à la transmission de données binaires par l'intermédiaire d'une interface ISO 7816-2 sont applicables aussi bien aux microcircuits à deux modes de fonctionnement qu'aux microcircuits fonctionnant exclusivement en mode contact. Ainsi, la présente invention permet non seulement la réalisation d'un microcircuit à deux modes de fonctionnement de conception simple, rationnelle, offrant une grande souplesse d'utilisation, qu'un microcircuit exclusivement à contact, offrant également une grande souplesse d'utilisation par son aptitude à recevoir des commandes de haut niveau- Par ailleurs, il entre dans le cadre de l'invention d'appliquer par analogie l'enseignement qui vient d'être donné à des interfaces normalisées de bas niveau autres que l'interface ISO 7816-2 pour cartes à mémoire. L'invention est donc applicable à tout type de microcircuit monté sur un support portable et piloté par l'intermédiaire d'une interface de bas niveau imposée par une norme.

Egalement, il apparaîtra clairement à l'homme de l'art que certaines caractéristiques de l'invention, comme le fait de procéder à une transformation série/parallèle des données binaires reçues, ne sont pas impératives à la mise en oeuvre de l'invention. Il est par exemple envisageable de réaliser un microcircuit comprenant une mémoire à port d'entrée/sortie série. De façon générale, diverses architectures de circuits connues de l'homme de l'art peuvent donc être mises en oeuvre dans un microcircuit selon l'invention.

Enfin, il convient de noter qu'en pratique le circuit d'interface 11 et le convertisseur 12 selon l'invention peut être fusionnés en un seul circuit dont la fonction est de détecter des signaux ou combinaisons de signaux reçus et délivrer les valeurs binaires correspondantes.

## Revendications

1. Microcircuit (40) de carte à puce, comprenant un circuit d'interface (11) agencé pour détecter des commandes de bas niveau (LC₁, LC₂, WRITE0, INCRADD, RSTADD) définies par une norme, lesdites commandes correspondant, au regard de ladite norme, à des opérations exécutables par un microcircuit, lesdites commandes étant reçues sous forme de signaux électriques (RST, CLK, IO) ou de combinaisons de signaux électriques (RST, CLK, IO) appliqués à des contacts électriques, **caractérisé en ce qu'**il comprend :
- des moyens (12) de conversion binaire de commandes de bas niveaux (LC₁, LC₂, WRITE0, INCRADD, RSTADD) reçues par le circuit d'interface (11), agencés pour convertir au moins une première commande de bas niveau (LC₁, WRITE0, RSTADD) en un bit de valeur 0 et au moins une seconde commande de bas niveau (LC₂, INCRADD) en un bit de valeur 1, de manière à délivrer une chaîne de bits (DTin₁) sur réception d'une suite desdites première (LC₁, WRITE0, RSTADD) et seconde (LC₂, INCRADD) commandes de bas niveau,
- des moyens (12, 33, BS) pour fractionner en un ou plusieurs mots binaires (BWinᵢ) de longueur prédéterminée la chaîne de bits (DTin₁) délivrée par les moyens de conversion (12), et
- une unité de traitement (31) pour exécuter des commandes de haut niveau (WRITE, AUTHENT, READ) délivrées sous forme desdits mots binaires par les moyens de conversion (12).

2. Microcircuit selon la revendication 1, dans lequel les moyens de conversion (12) sont agencés pour convertir au moins une troisième commande (RSTADD) de bas niveau en un signal (BS) de séparation de mots binaires (BWinᵢ) dans une chaîne de bits (DTin₁).

3. Microcircuit selon l'une des revendications 1 et 2, comprenant des moyens (33) pour convertir en données parallèles des mots binaires (BWinᵢ) contenus dans une chaîne de bits (DTin₁) délivrée par les moyens de conversion (12).

4. Microcircuit selon l'une des revendications 1 à 3, comprenant des moyens (12) pour insérer un bit (BS) de séparation de mots binaires (BWinᵢ) dans une chaîne de bits (DTin₁).

5. Microcircuit selon l'une des revendications 1 à 4, dans lequel l'unité de traitement (31) est agencée pour exécuter des commandes complexes (WRITE, AUTHENT, READ) comportant plusieurs champs (CODE_{OP}, ADD, ALEA, CRC, Wᵢ).

6. Microcircuit selon l'une des revendications précédentes, dans lequel le circuit d'interface (11) est agencé pour détecter des commandes de bas niveau (LC₁, LC₂, WRITE0, INCRADD, RSTADD) codées selon la norme ISO 7816-2.

7. Microcircuit selon la revendication 6, dans lequel ladite première commande de bas niveau (LC₁, WRITE0) est une commande d'écriture d'un bit à 0 dans une mémoire.

8. Microcircuit selon l'une des revendications 6 et 7, dans lequel ladite deuxième commande de bas niveau (LC₂, INCRADD) est une commande d'incrémentation d'une adresse de lecture ou d'écriture dans une mémoire.

9. Microcircuit selon l'une des revendications 6 à 8 dans lequel ladite troisième commande de bas niveau (RSTADD) est une commande de remise à 0 d'une adresse de lecture ou d'écriture dans une mémoire.

10. Microcircuit selon l'une des revendications précédentes, à deux modes de fonctionnement, avec ou sans contact, comprenant des moyens (20) pour recevoir des données binaires (DTin₂) en mode de fonctionnement sans contact.

11. Microcircuit selon la revendication 10, comprenant une partie commune (30) pour le traitement de données binaires (DTin₁, DTin₂) reçues dans l'un quelconque des deux modes de fonctionnement.

12. Procédé pour transmettre des commandes de haut niveau à un microcircuit (40) de carte à puce comprenant un circuit d'interface (11) agencé pour détecter des commandes de bas niveau (LC₁, WRITE0, LC₂, INCRADD, RSTADD) définies par une norme, lesdites commandes correspondant, pour ladite norme, à des opérations exécutables par un microcircuit, lesdites commandes étant reçues sous forme de signaux électriques (RST, CLK, IO) ou de combinaisons de signaux électriques (RST, CLK, IO) appliqués à des contacts électriques, **caractérisé en ce qu'**il comprend les étapes consistant à :
- attribuer par convention la valeur logique 0 à au moins une première commande de bas niveau (LC₁, WRITE0, RSTADD) et la valeur logique 1 à au moins une deuxième commande de bas niveau (LC₂, INCRADD),
- appliquer au microcircuit (40) une succession desdites première et deuxième commandes (LC₁, LC₂, WRITE0, INCRADD, RSTADD),
- dans le microcircuit (40), convertir (12) chaque commande de bas niveau (LC₁, LC₂, WRITE0, INCRADD, RSTADD) reçue par sa valeur binaire attribuée par convention au lieu d'exécuter la commande de bas niveau, de manière à transformer une suite desdites première (LC₁, WRITE0, RSTADD) et seconde (LC₂, INCRADD) commandes de bas niveau en une chaîne de bits (DTin₁).
- fractionner la chaîne de bits (DTin₁) en un ou plusieurs mots binaires (BWinᵢ) de longueur prédéterminée formant une ou plusieurs commandes de haut niveau (WRITE, AUTHENT, READ).

13. Procédé selon la revendication 12, dans lequel on utilise une troisième commande de bas niveau (RSTADD) comme moyen de séparation de mots binaires (BWinᵢ) dans une chaîne de bits (DTin₁).

14. Procédé selon l'une des revendications 12 et 13, dans lequel lesdites commandes de bas niveau sont définies par la norme ISO 7816-2.

15. Procédé selon la revendication 14, dans lequel ladite première commande de bas niveau (LC₁, WRITE0) est une commande d'écriture d'un bit à 0 dans une mémoire.

16. Procédé selon l'une des revendications 14 et 15, dans lequel ladite deuxième commande de bas niveau (LC₂, INCRADD) est une commande d'incrémentation d'une adresse de lecture ou d'écriture dans une mémoire.

17. Procédé selon l'une des revendications 14 à 16, dans lequel ladite troisième commande de bas niveau (RSTADD) est une commande de remise à zéro d'une adresse de lecture ou d'écriture dans une mémoire.

## Patentansprüche

1. Chipkartenmikroschaltung (40), umfassend eine Schnittstellenschaltung (11), die derart vorgesehen ist, dass sie Befehle niedriger Stufe (LC₁, LC₂, WRITE0, INCRADD, RSTADD) erfasst, die durch eine Norm definiert sind, wobei die Befehle im Hinblick auf die Norm Verfahren entsprechen, die von einer Mikroschaltung ausführbar sind, und die Befehle in Form elektrischer Signale (RST, CLK, IO) oder von Kombinationen elektrischer Signale (RST, CLK, IO), die an elektrische Kontakte angelegt werden, empfangen werden, **dadurch gekennzeichnet, dass** sie umfasst:
- Mittel (12) zur Binärumsetzung von Befehlen niedriger Stufe (LC₁, LC₂, WRTIE0, INCRADD, RSTADD), die von der Schnittstellenschaltung (11) empfangen werden, die derart vorgesehen sind, dass sie wenigstens einen ersten Befehl niedriger Stufe (LC₁, WRITE0, RSTADD) in ein Bit mit dem Wert 0 und wenigstens einen zweiten Befehl niedriger Stufe (LC₂, INCRADD) in ein Bit mit dem Wert 1 umsetzen, um bei Empfang einer Folge von ersten (LC₁, WRITE0, RSTADD) und zweiten (LC₂, INCRADD) Befehlen niedriger Stufe eine Bitkette (DTin₁) zu liefern;
- Mittel (12, 33, BS) zur zergliederung der Bitkette (DTin₁), die von den Umsetzungsmitteln (12) geliefert wird, in ein oder mehrere Binärworte (BWinᵢ) vorbestimmter Länge; und
- eine Bearbeitungseinheit (31), um Befehle hoher Stufe (WRITE, AUTHENT, READ) auszuführen, die in Form der Binärworte von den Umsetzungsmitteln (12) geliefert werden.

2. Mikroschaltung nach Anspruch 1, wobei die Umsetzungsmittel (12) derart vorgesehen sind, dass sie wenigstens einen dritten Befehl (RSTADD) niedriger Stufe in ein Signal (BS) zur Trennung von Binärworten (BWinᵢ) in einer Bitkette (DTin₁) umsetzen.

3. Mikroschaltung nach einem der Ansprüche 1 und 2, umfassend Mittel (33), um Binärworte (BWinᵢ), die in einer Bitkette (DTin₁), die von den Umsetzungsmitteln (12) geliefert wird, enthalten sind, in parallele Daten umzusetzen.

4. Mikroschaltung nach einem der Ansprüche 1 bis 3, umfassend Mittel (12), um ein Bit (BS) zur Trennung von Binärworten (BWinᵢ) in eine Bitkette (DTin₁) einzusetzen.

5. Mikroschaltung nach einem der Ansprüche 1 bis 4, wobei die Bearbeitungseinheit (31) derart vorgesehen ist, dass sie komplexe Befehle (WRITE, AUTHENT, READ) ausführt, die mehrere Felder (CODE_{OP}, ADD, ALEA, CRD, Wᵢ) umfassen.

6. Mikroschaltung nach einem der vorhergehenden Ansprüche, wobei die Schnittstellenschaltung (11) derart vorgesehen ist, dass sie Befehle niedriger Stufe (LC₁, LC₂, WRITE0, INCRADD, RSTADD) erfasst, die nach der Norm ISO 7816-2 codiert sind.

7. Mikroschaltung nach Anspruch 6, wobei der erste Befehl niedriger Stufe (LC₁, WRITE0) ein Befehl zum Schreiben eines Bits bei 0 in einen Speicher ist.

8. Mikroschaltung nach einem der Ansprüche 6 und 7, wobei der zweite Befehl niedriger Stufe (LC₂, INCRADD) ein Befehl zur Inkrementierung einer Lese- oder Schreibadresse in einen Speicher ist.

9. Mikroschaltung nach einem der Ansprüche 6 bis 8, wobei der dritte Befehl niedriger Stufe (RSTADD) ein Befehl zur Rücksetzung einer Lese- oder Schreibadresse in einem Speicher auf 0 ist.

10. Mikroschaltung nach einem der vorhergehenden Ansprüche mit zwei Betriebsarten, mit oder ohne Kontakt, umfassend Mittel (20), um Binärdaten (DTin₂) in der kontaktlosen Betriebsart zu empfangen.

11. Mikroschaltung nach Anspruch 10, umfassend einen gemeinsamen Teil (30) zur Bearbeitung von Binärdaten (DTin₁, DTin₂), die in einer der beiden Betriebsarten empfangen wurden.

12. Verfahren zur Übertragung der Befehle hoher Stufe an eine Chipkartenmikroschaltung (40), umfassend eine Schnittstellenschaltung (11), die derart vorgesehen ist, dass sie Befehle niedriger Stufe (LC₁, LC₂, WRITE0, INCRADD, RSTADD) erfasst, die durch eine Norm definiert sind, wobei die Befehle im Hinblick auf die Norm Verfahren entsprechen, die von einer Mikroschaltung ausführbar sind, und die Befehle in Form elektrischer Signale (RST, CLK, IO) oder von Kombinationen elektrischer Signale (RST, CLK, IO), die an elektrische Kontakte angelegt werden, empfangen werden, **dadurch gekennzeichnet, dass** es die folgenden Schritte umfasst, darin bestehend:
- durch Vereinbarung den logischen Wert 0 mindestens einem ersten Befehl niedriger Stufe (LC₁, WRITE0, RSTADD) und den logischen Wert 1 mindestens einem zweiten Befehl niedriger Stufe (LC₂, INCRADD) zuzuordnen;
- an die Mikroschaltung (40) eine Aufeinanderfolge der ersten und zweiten Befehle (LC₁, LC₂, WRITE0, INCRADD, RSTADD) anzulegen;
- in der Mikroschaltung (40) jeden Befehl niedriger Stufe (LC₁, LC₂, WRITE0, INCRADD, RSTADD), der durch seinen durch Vereinbarung zugeordneten Binärwert empfangen wurde, umzusetzen (12), anstatt den Befehl niedriger Stufe auszuführen, um eine Folge der ersten (LC₁, WRITE0, RSTADD) und zweiten (LC₂, INCRADD) Befehle niedriger Stufe in eine Bitkette (DTin₁) umzuformen; und
- die Bitkette (DTin₁) in ein oder mehrere Binärworte (BWinᵢ) vorbestimmter Länge zu zergliedern, die einen oder mehrere Befehle hoher Stufe (WRITE, AUTHENT, READ) bilden.

13. Verfahren nach Anspruch 12, wobei ein dritter Befehl niedrigere Stufe (RSTADD) als Mittel zur Trennung von Binärworten (BWinᵢ) in einer Bitkette (DTin₁) verwendet wird.

14. Verfahren nach einem der Ansprüche 12 und 13, wobei die Befehle niedriger Stufe durch die Norm ISO 7816-2 definiert sind.

15. Verfahren nach Anspruch 14, wobei der erste Befehl niedriger Stufe (LC₁, WRITE0) ein Befehl zum Schreiben eines Bits bei 0 in einen Speicher ist.

16. Verfahren nach einem der Ansprüche 14 und 15, wobei der zweite Befehl niedriger Stufe (LC₂, INCRADD) ein Befehl zur Inkrementierung einer Lese- oder Schreibadresse in einem Speicher ist.

17. Verfahren nach einem der Ansprüche 14 bis 16, wobei der dritte Befehl niedriger Stufe (RSTADD) ein Befehl zur Rücksetzung einer Lese- oder Schreibadresse in einem Speicher auf 0 ist.

## Claims

1. Smart card microcircuit (40) comprising an interface circuit (11) arranged to detect low level commands (LC₁, LC₂, WRITE0, INCRADD, RSTADD) defined by a norm, said commands corresponding, relative to the norm, to tasks carried out by a microcircuit, said commands being received in the form of electrical signals (RST, CLK, IO) or combinations of electrical signals (RST, CLK, IO) applied to electrical contacts, **characterised in that** it comprises :
- binary conversion means (12) of low level commands (LC₁, LC₂, WRITE0, INCRADD, RSTADD) received by the interface circuit (11), arranged to convert at least one first low level command (LC₁, WRITE0, RSTADD) into a bit with a value of 0 and at least one second low level command (LC₂, INCRADD) into a bit with a value of 1, in such a way as to deliver a bit stream (DTin₁) on receipt of a series of said first (LC₁, WRITE0, RSTADD) and second (LC₂, INCRADD) low level commands,
- means (12, 33, BS) for dividing the bit stream (DTin₁), delivered by the conversion means (12), into one or several binary words (BWin₁), and
- a processing unit (31) to execute high level commands (WRITE, AUTHENT, READ) delivered in the form of said binary words by the conversion means (12).

2. Microcircuit according to claim 1, **characterised in that** the conversion means (12) are arranged to convert at least one third low level command (RSTADD) into a signal (BS) to separate binary words into a bit stream (DTin₁).

3. Microcircuit according to one of claims 1 and 2, comprising means (33) for converting binary words (BWinᵢ) contained in a bit stream (DTin₁), delivered by the conversion means (12), into parallel data.

4. Microcircuit according to one of claims 1 to 3, comprising means (12) for integrating a bit (BS) to separate binary words (BWinᵢ) in a bit stream (DTin₁).

5. Microcircuit according to one of claims 1 to 4, in which the processing unit (31) is arranged to execute complex commands (WRITE, AUTHENT, READ) comprising several fields (CODE_{OP}, ADD, ALEA, CRC, Wᵢ).

6. Microcircuit according to one of the preceding claims, in which the interface circuit (11) is arranged to detect low level commands (LC₁, LC₂, WRITE0, INCRADD, RSTADD) coded according to the ISO norm 7816-2.

7. Microcircuit according to claim 6, in which the said first low level command (LC₁, WRITE0) is a command for writing a bit with a value of 0 in a memory.

8. Microcircuit according to one of claims 6 and 7, in which the said second low level command (LC₂, INCRADD) is a command for incrementing an address for reading or writing in a memory.

9. Microcircuit according to one of claims 6 to 8, in which the said third low level command (RSTADD) is a command for restoring an address for reading or writing in a memory to 0.

10. Microcircuit according to one of the preceding claims, with two operating modes, with or without contact, comprising means (20) for receiving binary data (DTin₂) in an operating mode without contact.

11. Microcircuit according to claim 10, comprising a common part (30) for processing binary data (DTin₁, DTin₂) received in either of the two operating modes.

12. Method of transmitting high level commands to a smart card microcircuit (40) comprising an interface circuit (11) arranged to detect low level commands (LC₁, WRITE0, LC₂, INCRADD, RSTADD) defined by a norm, the said commands corresponding, as regards the said norm, to tasks carried out by a microcircuit, the said commands being received in the form of electrical signals (RST, CLK IO) or a combination of electrical signals (RST, CLK, IO) applied to electrical contacts, **characterised in that** it comprises stages consisting of :
- attributing, by convention, the logical value 0 to at least one first low level command (LC₁, WRITE0, RSTADD) and the logical value 1 to at least one second low level command (LC₂, INCRADD),
- implementing a series of said first and second commands (LC₁, LC₂, WRITE0 INCRADD, RSTADD) to the microcircuit (40),
- converting (12), in the microcircuit (40), each low level command (LC₁, LC₂, WRITE0, INCRADD, RSTADD) received by its binary value attributed by convention instead of executing the low level command so as to transform a series of said first (LC₁, WRITE0 RSTADD) and second (LC₂, INCRADD) low level commands into a bit stream (DTin₁),
- dividing the bit stream (DTin₁) into one or several binary words (BWinᵢ) of predetermined length forming one or several high level commands (WRITE, AUTHENT, READ).

13. Method according to claim 12, in which a third low level command (RSTADD) is used as a means for separating binary words (BWinᵢ) in a bit stream (DTin₁).

14. Method according to one of claims 12 and 13, in which the said low level commands are defined by the ISO norm 7816-2.

15. Method according to claim 14, in which the said first low level command (LC₁, WRITE0) is a command for writing a bit with a value of 0 in a memory.

16. Method according to one of claims 14 and 15, in which the said second low level command (LC₂, INCRADD) is a command for incrementing an address for reading or writing in a memory.

17. Method according to one of claims 14 to 16, in which the said third low level command (RSTADD) is a command for restoring an address for reading or writing in a memory to zero.
